# EUROPEAN PATENT SPECIFICATION

(11) **EP 0 404 060 B1**
(45) Date of publication and mention of the grant of the patent: **26.05.1993**
(21) Application number: 90111562.6
(22) Date of filing: 19.06.1990
(51) Int. Cl.: F02D 41/14, F02D 41/26

(54) **An electronic fuel injection system for internal combustion engines, with self-adjusting flow rate strategy**
Elektronisches Kraftstoffeinspritzsystem für Verbrennungskraftmaschinen mit adaptiver Durchflusssteuerungsstrategie
Système d'injection de carburant électronique pour moteurs à combustion interne, avec stratégie de commande de débit auto-adaptative

(30) Priority: 20.06.1989 IT 6750289
(43) Date of publication of application: 27.12.1990
(73) Proprietor: WEBER S.r.l., I-10125 Torino (IT)
(72) Inventor: Fato, Massimo, I-41100 Modena (IT)
(74) Representative: Jorio, Paolo

(56) References cited:
- EP-A- 191 923
- EP-A- 0 145 992
- GB-A- 2 162 967
- US-A- 4 530 333
- US-A- 4 553 518
- US-A- 4 669 439
- PATENT ABSTRACTS OF JAPAN vol. 7, no. 271 (M-260)(1416) 03 December 1983,& JP-A-58 150057 (TOYOTA JIDOSHA KOGYO K.K.) 06 September 1983,

## Description

The present invention relates to an electronic fuel injection system for internal combustion engines, of the type comprising a central electronic control unit the central processor unit of which receives information signals from sensor means which detect such principal operating parameters as the speed of rotation of the engine and the position of the butterfly valve which regulates the air aspirated into the engine, as well as the concentration of the components in the exhaust gas, and in which this central control unit controls the manner in which the fuel is injected, preferably by means of a single injector unit. In particular, in dependence on the speed of rotation of the engine and the position of the butterfly valve the central processor unit calculates, by interpolation on a memorised map, a basic injection time (thus determined by an open loop calculation) which is corrected in dependence on the various operating conditions, both by means of the parameters provided by additional sensor means which detect at least the temperature of the engine coolant liquid and the temperature of the air aspirated by the engine, and by means of the information signal from the exhaust gas sensor (which therefore determines a closed loop control of the injection time).

Fuel injection systems of this type are known, and differ from one another substantially in the characteristics of the electronic central control unit both as far as the hardware configuration is concerned and as far as the operating programme is concerned, in dependence on the performance which is required from the fuel injection system itself.

It is also known that variations in the petrol-air ratio can occur (not only transients) due to modifications in the operating characteristics or structural characteristics of the engine or the fuel injection system, dependent on various causes including:
- variations in the air density due to changes in temperature, relative humidity or atmospheric pressure;
- variations in the volumetric efficiency of the engine due to modifications in the exhaust gas back pressure, or the valve clearances, or the compression ratio, or characteristics of mechanical parts;
- tolerances and drift of the sensors or actuators of the fuel injection system due to variations in the capacity of the injectors or the fuel pressure or the electrical characteristics of the sensors or the actuators.

The effect of these perturbations in fact translates into an error in the metering of the fuel mixture in that the injection time mapping, defined in nominal conditions, no longer corresponds to the real fuel supply requirements of the engine.

There have therefore been produced self-adjustment strategies based on feedback from the exhaust gas sensor, to compensate these deviations in the petrol-air mixture from the optimum stoichiometric ratio. The strategies which have been developed are, however, particularly complex, requiring a very high processing capacity of the central control unit, and are therefore not suitable for implementation on relatively simplified fuel injection systems, for example those of the single point injector type. Therefore, there has been provided a simplified system, as shown in EP-A-191923, in which the learnt lambda correction MAP has a number of entries (8*8) which is smaller than the number of the throttle valve/rpm entries (16*16) of the basic fuel injection MAP. The object of the present invention is that of providing an electronic fuel injection system of the said type which will have a self-adjustment strategy for correction of the deviations in the fuel/air ratio in a relatively simplified manner whilst guaranteeing valid performances comparable with those of more complex systems.

Other objects and advantages obtained with the system of the present invention will become apparent from the following description.

According to the present invention there is provided an electronic fuel injection system for an internal combustion engine, comprising a central electronic control unit including a central processor receiving information signals at least from means for detecting the speed of rotation of the said engine, means for detecting the position of a valve regulating the quantity of air supplied to the engine, and means for detecting the engine exhaust gas, in which the said central processor includes first means for performing an open loop calculation of the basic injection time in dependence on the said information signals from the said means for detecting the speed of rotation of the said engine and said means for detecting the position of the said valve regulating the quantity of air supplied to the said engine, defining an operating region of the said engine, second means for correction of the said basic injection time in dependence of other detected engine parameters, third means for performing a closed loop calculation of first correction factors of the said basic injection time also in dependence on the said information signals from the said means for detecting the exhaust gas, fourth means for correction of the said basic injection time in dependence on the said first correction factors, fifth means for calculation and self-modification in memory means, of second correction factors of the said basic injection time in dependence on the said first correction factors, and sixth means for correction of the said basic injection time in dependence on the said second correction factors, the said second correction factors which can be automatically modified by the said system being fewer in number than the number of regions of sub-division of a working region of the said engine for the selection of the said second correction factors, the said regions being addressable by address means in dependence on the said information signals from the said means for detecting the speed of rotation of the said engine and the said means for detecting the position of the said valve regulating the quantity of air supplied to the said engine, characterised by the fact that the said second and automatically modifiable correction factors (KADAT), below predetermined values (NL,PFARFL) of the speed of rotation of the said engine and of the opening position of the said valve for adjustment of the quantity of air supplied to the said engine, are addressable in the said reading and writing RAM memory means in direct correspondence with the said zones into which the said working region of the said engine is sub-divided, and in that the said second automatically modifiable correction factors (KADAT), above predetermined values (NL, PFARFL) of the speed of rotation of the said engine and of the opening position of the said valves for adjustment of the quantity of air supplied to the said engine, are selectable in the said reading and writing RAM memory means in correspondence with zones adjacent to addressed zones into which the said operating region of the said engine is sub-divided.

For a better understanding of the present invention a particular embodiment will now be described purely by way of non-limitative example with reference to the attached drawings, and which:
Figure 1 is a schematic representation of the electronic fuel injection system fitted to a heat engine and formed according to the principles of the present invention;
Figure 2 is a more detailed block diagram of the central electronic control unit of the system of Figure 1;
Figure 3 is a flow chart of the operation of the central processor of the electronic central control unit of the system of Figure 1;
Figures 4, 5a and 5b are more detailed flow charts of some of the blocks of the flow chart of Figure 3;
Figure 6 illustrates the progressive variation of various signals referred to in the diagrams of Figures 1 and 3; and
Figures 7a and 7b respectively and schematically illustrate a memorisation map of the basic injection times and a memorisation map of the adaptation coefficients according to the system of the present invention.

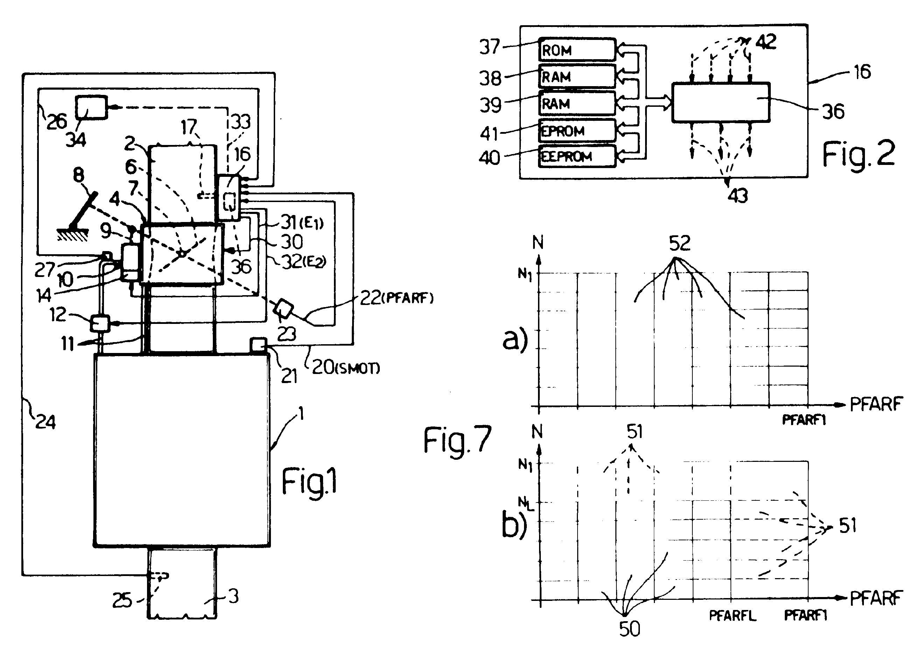

With reference to Figure 1, the reference numeral 1 schematically indicates an internal combustion engine for a vehicle, provided with an inlet duct 2 and an exhaust duct 3; in this inlet duct 2 there is fitted, in a substantially known way and by means of attachment flanges, an electronic fuel injection unit 4, conveniently constituted by a single point injector. In the inlet duct 2, in correspondence with this unit 4, there is disposed a main butterfly valve 6 having a spindle 7 about which it rotates, and the angular position of which is mechanically controlled by an accelerator pedal 8. The position of minimum rotation of the spindle 7 is mechanically controlled by a piston 9 of a heat sensitive element 10, conveniently containing a mixture of wax, of the type for example described in Italian Patent application No 67105-A/87 filed 17 February 1987 by the same applicant. In particular, this heat sensitive element 10 is in thermal contact with a recirculation duct 11 for the engine coolant liquid, in which is interposed a solenoid valve 12, whilst an electric heater element 14 is in direct thermal contact with the heat sensitive element 10, which is supported by the fuel injection unit 4.

The reference numeral 16 indicates a central electronic control unit for the fuel injection system under discussion, which is mounted on the inlet duct 2; this central control unit 16 directly supports a sensor 17 (substantially of known type) for detecting the temperature of the air supplied to the engine 1, which is disposed therefore in such a way as to be in the stream of air passing through the duct 2. This central control unit 16 there receives:
a first signal 20 (SMOT) provided by the primary circuit of the ignition coil 21, useful for detecting the speed of rotation (N) of the engine 1;
a second signal 22 (PFARF) indicative of the position of the butterfly valve 6 and coming from a potentiometer 23 coupled in a known way to the spindle 7;
a third signal 24 provided by a sensor 25 disposed in the exhaust duct 3, detecting a parameter of the concentration of at least one component of the exhaust gas: this sensor 25 is of substantially known type and can comprise a "lambda" probe, and in normal operating conditions of the engine 1 and of the sensor 25 the signal 24 is variable between two levels namely zero volts and one volt which define air/fuel mixture supply conditions above and below the correct stoichiometric ratio (lambda=1);
and a fourth signal 26 provided by a sensor 27 coupled to the duct 11, which detects the temperature of the coolant water of the engine 1.

The central control unit 16 in turn provides:
a first signal 30 for controlling the single injector of the unit 4;
a second signal 33 for controlling an alarm indicator device 34 of optical and/or acoustic type;
and a pair of signals 31 (E1) and 32 (E2) for control respectively of the electric heater element 14 and the solenoid valve 12.

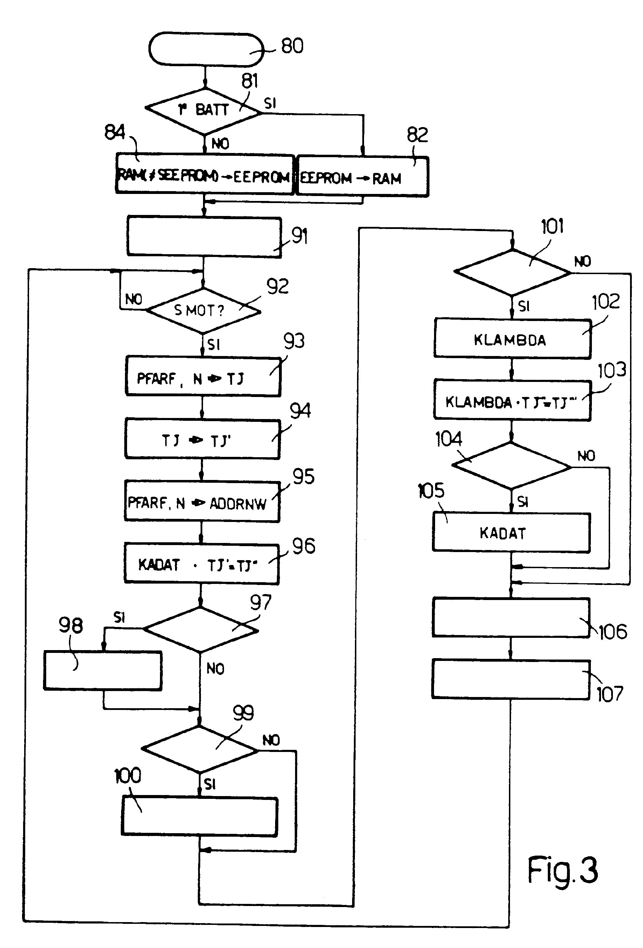

In Figure 2 the central control unit 16 is illustrated in more detail, comprising a central microprocessor (CPU) unit 36 to which are connected memory units, including: a ROM 37 for memorising the basic injection times (TJ) in the mapped injection plane (PFARF-N), defining the operating region of the engine 1 which is a function of the speed of rotation of the engine 1 and of the position of the butterfly valve 6, a RAM 38 for temporary memorisation of the modifying correction coefficients for these basic injection times, a RAM 39 for memorisation of these modification coefficients, a EEPROM 40 for auxiliary memorisation of these modification coefficients, and an EPROM 41 for memorisation of the values of the various parameters utilised in the operation of the blocks of Figures 3, 4, 5a and 5b as will be described hereinbelow; this central control unit 36 is connected to inputs 42 and outputs 43 for the signals described in Figure 1.

The programme of the central control unit 36 with which the various input signals are acquired and the various command signals are sent to the output is periodically repeated at convenient intervals of the order of several milliseconds, and is of conventional type, for example as described in Italian Patent application No 67081-A/88 filed 5 February 1988 by the same applicant, the contents of which are incorporated herein by reference.

The main programme of the processor unit 36, for calculation of the injection times of the single point injector unit 4, acts, in a conventional manner:
to calculate a basic injection time (TJ) in dependence on the parameter N (speed of rotation of the engine 1) formed from the signal 20 SMOT, and the parameter PFARF (position of the butterfly valve 6) formed from the signal 22 from the potentiometer 23;
to correct this basic injection time in dependence on the correction strategy by obtaining a modified injection time (TJ');
to enable or disable temporary control strategies of the single point injector unit 4 (inhibition of the injection) and additional actuators (such as the electric heater element 14 and the heat sensitive element 10);
to enable or disable closed loop control strategies for the injection time (by means of the signal 24 from the sensor 25);
to correct the injection time in dependence on the correction coefficients (KADAT) memorised in the RAM block 39;
to enable or disable progressive modification strategies for modifying the value of these correction coefficients (KADAT) in the temporary memory RAM block 38;
to enable the actuation of the conveniently modified injection time by means of the single injector 4.

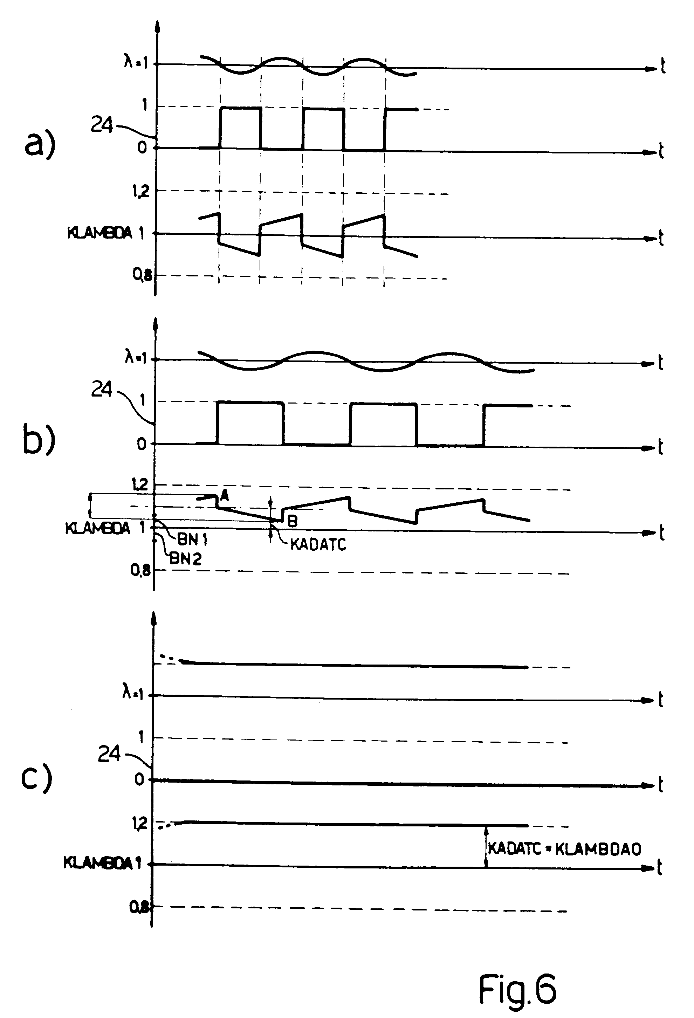

In particular, as exemplified in Figure 6, the closed loop control of the injection time effects a modification of this time of the proportional-integral type, by means of a correction coefficient (KLAMBDA) the sign of which is dependent on the signal 24 from the monitoring sensor 25. If the basic injection time corresponds to a stoichiometric calibration of the fuel mixture (Figure 6a) the mean value of the correction is nil. In fact with an oscillation of the calibration of the mixture about the stoichiometric value (lambda=1) there is a corresponding oscillation of the signal 24 between the values 0 and 1, and an oscillation of the correction coefficient KLAMBDA about the value 1; if on the other hand the basic open loop calibration is not stoichiometric (Figure 6b) a correction coefficient KLAMBDA is automatically affected by a constant component (KADTC) offering a percentage compensation of the error in the basic injection time memorised in the ROM block 37 such as to bring the oscillation of the calibration of the mixture in a closed loop about the stoichiometric value (lambda=1) and with a corresponding oscillation of the signal 24 between the values 0 and 1.

The central processing unit 36 has a limited effect on the regulation of the closed loop injection time which is restricted to ±20% of the basic time, so that above this value (Figure 6C) the correction coefficient KLAMBDA is automatically limited (saturated) to a constant component (in this case +KLAMBDA0), and consequently the signal 24 is fixed at the value zero, indicative of the fact that the fuel mixture remains constantly weak (lambda greater than 1).

The correction of the injection time in dependence on the correction coefficient (KADAT) memorised in the RAM block 39, is automatically and progressively modified with variation of the characteristics of the operating parameters of the engine 1, and has the function of modifying in real time the basic injection time memorised in the ROM block 37 on the basis of initial stoichiometric calibration conditions of the fuel mixture, so as to nullify the constant correction component KADTC of the closed loop control system so as to allow possible transient correction interventions of this closed loop control system starting from the central position of the control band (±20%).

These correction coefficients (KADAT) are memorised in respective memory cells of the RAM 39 corresponding to respective regions 50 (Figure 7b) defined by end values of the parameter N (speed of rotation of the engine 1) formed from the signal 20 SMOT, and of the parameter PFARF (position of the butterfly valve 6) formed from the signal 22 of the potentiometer 23; according to a characteristic of the system of the present invention, these regions 50 are defined within limit values, respectively NL and PFARFL, of the speed of rotation of the engine 1 and the position of the butterfly valve 6, which are less than respective maximum values N1 and PFARF1 which define the working region of the engine 1; outside these zones 50 there are therefore zones 51, defined by the same extreme values of the parameter N or PFARF for the zones 50, and within these maximum values N1 and PFARF1. As is visible in Figure 7a, the operating region of the engine 1 within the maximum values N1 and PFARF1 is sub-divided into a plurality of zones 52, defined by extreme values of the parameter N and PFARF, which establish the areas of interpolation for the basic injection times (TJ) memorised in the ROM 37, and which are greater in number than the zones 50 for memorisation of the correction coefficients KADAT in the RAM 39.

As will be described in more detail below, in the operating programme of the central processing unit 36, these correction coefficients KADAT are utilised in all working conditions of the engine 1 (on starting, when hot, normal operating conditions, transient conditions, with open or closed loop control etc) and these are selected in the RAM 39 on the basis of the zones 50 (Figure 7b) addressed by the current parameters N and PFARF formed from the signals 20 and 22; if the zones 51 are addressed, according to the system of the present invention the correction coefficients KADAT of adjacent zones 50 are selected.

If the system is in the condition in which the correction coefficient KLAMBDA is limited (saturated) at a constant component KLAMBDA0, then according to the present invention the correction coefficient KADAT utilised immediately is that temporarily memorised in the RAM 38 for memorisation of the progressive modifications of the said coefficient. These correction coefficients KADAT are in fact normally progressively modified in the temporary memory RAM 38 and updated in the RAM 39, in certain conditions which ensure a correct learning of the displacement from the stoichiometric calibration of the fuel mixture which must be compensated. These conditions are set on activation of the closed loop control of the injection time, and on the steadiness of the engine operating conditions. After a delay of a certain time has past waiting in these steady operating conditions, at each cycle of commutation of the signal 24 of the sensor 25 a modification (if necessary) of the value of the correction coefficient KADAT of the addressed zone is in fact enabled, with temporary memorisation in the corresponding memory cell of the RAM 38; this modification is of a selectable magnitude, and is additive or subtractive, depending on the sign of the mean value of the constant component of the correction coefficient KLAMBDA to be compensated. Enablement of modification of the value of the correction coefficient KADAT of the addressed zone, in the corresponding memory cell of the RAM 39, takes place only after a further time delay in these steady operating conditions, and the effective updating of this correction coefficient KADAT in the corresponding memory cell of the RAM 39 takes place only in correspondence with a change of zone 50 addressed by the parameters N and PFARF, for which the calculation of the delay updating of the said correction coefficient has been made.

If the system is in the condition in which the correction coefficient KLAMBDA is limited (saturated) at a constant component KLAMBDA0, then according to the present invention the calculation of the progressive modification of the value of the correction coefficient KADAT of the addressed zone, with temporary memorisation of the corresponding memory cell of the RAM 38, is effected more frequently, each stroke of the engine.

As will be further described hereinbelow in detail, after the value of the correction coefficient KADAT has been calculated by the system for the zone 50 during the first cycle of execution of the control strategy of the injection system, relating to normal slow running conditions of the engine 1, according to the present invention, on the basis of this initial value there are calculated and memorised in the RAM 39 also the values of the correction coefficients for the other zones 50, thus achieving an end point auto-calibration.

Also for the purpose of simplifying the processing required to be performed by the central unit 36, and at the same time to provide for a more rapid and correct determination of the correction coefficients KADAT for the various operating conditions of the engine 1, the system of the present invention acts to transfer the content (correction coefficients KADAT) of the memory cells of the RAM 39 into the corresponding cells of the auxiliary EEPROM memory 40 at the beginning of each cycle of execution of the injection system control strategy (that is to say each time the engine 1 is started) whilst it provides for the transfer of the content of the cells of the auxiliary EEPROM memory 40 into the corresponding memory cells of the RAM 39 at each initial supply of the central control unit 16 (that is to say upon initial connection of the vehicle battery).

As is therefore illustrated in Figure 3, which illustrates the main programme of the processing unit 36, for calculating the injection times of the single point injector unit 4, from an initial block 80 the programme leads to a block 81 which detects (by means for example of monitoring the voltage on a capacitor) if the central control unit 16 is reconnected after the vehicle battery has been disconnected: in the positive case it leads to a block 82 which commands transfer to the RAM 39, for the various address zones 50, of the adaption coefficients KADAT memorised in the EEPROM memory 40, and then leads to a block 91 which commands initialisation of data and parameters in various counters, registers and memories of the central control unit 16, which will be described further below; the programme also leads to this block 91 in the negative condition (normal starting of the vehicle) detected by the block 81, via a block 84 which commands transfer to the EEPROM memory 40, for the various address zones 50, of the adaption coefficients KADAT memorised in the RAM 39 if they differ from those already memorised in this EEPROM memory 40 by an amount greater than the value SEEPROM memorised in the EPROM memory 41. Then it leads to a block 92 which ascertains if a signal 20 (SMOT) has arrived at the central unit 36: in the negative case it returns to the input of block 92, whilst in the positive case (that is to say at each engine phase) it leads to a block 93 which calculates in a known way by interpolation from a map (Figure 7a) memorised in the ROM 37, the value of a base injection time TJ in dependence on the values of the parameters PFARF and N (indicative of the position of the butterfly valve 6 and the speed of rotation of the engine 1) obtained from the signals 22 and 20; the determination of this value TJ is thus an open loop calculation.

From block 93 the programme leads to a block 94 which effects in a substantially conventional manner the possible necessary corrections on the basic injection time TJ, deriving a corrected value TJ', such correction conditions being detected and corrected by means of signals provided by various sensors 21, 17, 27, 23, 25 considered individually and in combination, and being due for example to temporary variations in the functional parameters such as, for example, the temperature of the engine cooling water or the temperature of the aspirated air, or to particular operating conditions such as the start-up conditions of the engine 1, or the transient operating conditions due to significant variations in the position of the butterfly valve 6.

From the block 94 it leads to a block 95 which, in dependence on the values of the parameters PFARF and N determines (Figure 7b) an indicator ADDRNW of the current operating region within the range of the engine 1 from among the regions 50 and 51 lying in the possible operating range of the engine itself; from the block 95 the programme then leads to a block 96 which calculates a corrected injection time (TJ') on the basis of the correction coefficient KADAT selected in the RAM memory 39 at the address determined by the indicator ADDRNW.

From the block 96 it leads to a block 97 which detects, in a substantially known way, if the conditions for actuation of the "cut off" strategy exist, that is to say conditions of release of the accelerator pedal 8 with the engine operating region 1 greater than a predetermined threshold: in the positive case it leads to a block 98 which inhibits the command for enabling the single injector of the unit 4, and then leads to a block 99 at which it also arrives directly in the event of a negative detection from block 97.

This block 99 detects, in a substantially known way as described in the said Patent application 671,05-A/87, if conditions for actuation of the slow running control strategy of the engine 1 exist, by means of the temperature sensitive element 10; in the positive case it leads to a block 100 which calculates the values for the command and control signals 31 and 32 and then leads to a block 101 to which it also passes directly in the case of a negative detection by block 99.

This block 101 detects, in a substantially known way, if the engine is operating in conditions for actuation of the strategy for controlling the injection time also as a function of the exhaust gas concentration, detected by the sensor 25, so as to achieve a closed loop control (this control strategy is not adopted for example during warm up of the engine, nor when maximum power is required from the engine etc): in the negative case it leads directly to a block 106, whilst in the positive case it leads to a block 102 which calculates, in a substantially known way, the correction values KLAMBDA for the injection time so as to obtain, by means of a subsequent block 103, a final injection time TJ‴ which ensures stoichiometric conditions for the fuel mixture.

From the block 103 it then leads to a block 104 which detects if the operating conditions of the engine 1 are steady, to calculate the updating of these correction coefficients KADAT, by detecting in particular the signals from the sensors 23 (position of the butterfly valve 6), 17 (temperature of the air aspirated by the engine 1) and 27 (temperature of the coolant water of the engine 1), and verifying if the value PFARF remains constant for a defined time period by means of a decremental counter the initial value of which is established in the EPROM block 41, if the temperature of the air aspirated by the engine 1 is greater than a threshold value TA, and if the temperature of the coolant water of the engine 1 is greater than a threshold value TB, both these thresholds TA and TB being established in the EPROM block 41. In the case of a negative result from the block 104 it leads to block 106, whilst in the positive case it leads to a block 105 which puts into effect the calculation of the updating of these factors KADAT.

From the block 105 it then moves on to block 106 which controls, in a substantially known way, the verification of the state of functionality or otherwise of the various input and output circuits of the central control unit 16, and generates the signal 33 in the case of anomalous conditions. From block 106 it leads to a block 107 which in dependence on the final injection time determined for the single injector of the unit 4, establishes the manner of synchronous or asynchronous injection with respect to the phase of the engine 1, and further prepares the unit 4 to effect injection. From block 107 it then returns to the block 92.

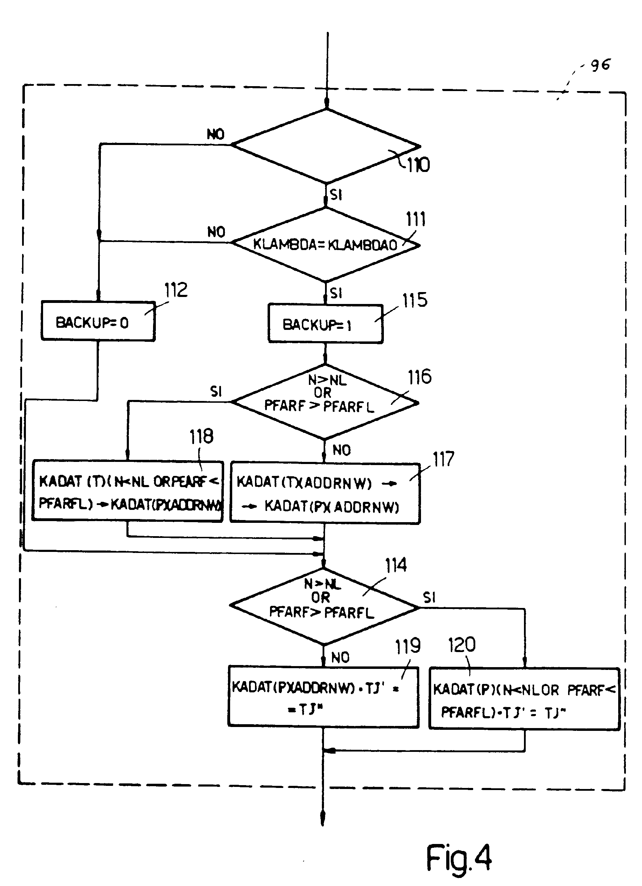

In Figure 4 is illustrated in greater detail the block 96 for calculation of the corrected injection time (TJ') on the basis of the correction coefficient KADAT selected in the RAM 39, at the address determined from the indicator ADDRNW by the block 95. In particular, it starts from a block 110 which detects if the control system has just been in open loop operation, in which the injection time is determined (by means of the block 103 of Figure 3) also in dependence on the concentration of the exhaust gases detected by the sensor 25: in the positive case it leads to a block 111 which detects if the closed loop control system is in saturation conditions (Figure 6C) by evaluating if the correction coefficient KLAMBDA calculated by the block 102 of Figure 3 has reached the limit value KLAMBDA0, and in the negative case it leads to a block 112 (to which it also leads in the case of a negative result from the block 110), which sets an indicator BACKUP = 0, indicative of the absence of conditions for immediate memorisation of the correction coefficient KADAT in the current address ADDRNW of the temporary memory RAM 38 at the corresponding address in the main memory RAM 39. From the block 112 it leads then to a block 114 which will be described further below and which belongs to the phase of effective calculation of the new corrected injection time TJ'. In the case of positive conditions detected by the block 111 (closed loop control system in saturation conditions) it leads to a block 115 which sets the indicator BACKUP = 1, indicative of the conditions of immediate memorisation of the correction coefficient KADAT in the temporary memory RAM 38 at the corresponding address ADDRNW in the main memory RAM 39. From block 115 it then leads to a block 116 which detects if the current value of the parameter N (speed of rotation of the engine 1) or of the parameter PFARF (position of the butterfly valve 6) is greater than the limit value NL and PFARFL respectively (Figure 7b), which would indicate an operating condition of the engine 1 in the zone 51 rather than in the zone 50: in the negative case it leads to a block 117 which commands the transfer of the correction coefficient KADAT contained in the temporary memory RAM 38 at the address ADDRNW defining a respective zone 50, to the corresponding address ADDRNW in the main memory RAM 39; in the case of positive conditions detected by the block 116 (current condition of operation of the engine 1 in one of the zones 51) it now leads to a block 118 which commands transfer of the correction coefficient KADAT contained in the temporary memory RAM 38 at the address ADDRNW of a zone 50 adjacent to the said current zone 51, to the corresponding address ADDRNW in the main memory RAM 39.

Both from the block 117 and from the block 118 the programme leads to the block 114 which detects in a similar manner to the block 116 if the current value of the parameter N or of the parameter PFARF is greater than the limit value NL and PFARFL respectively; in the negative case (current operating condition of the engine 1 in one of the zones 50) then it leads to a block 119 which commands calculation of the corrected injection time TJ" by modification of the previously determined injection time TJ' (via the block 94 of Figure 3) multiplied by the correction coefficient KADAT memorised at the address ADDRNW in the main memory RAM 39. In the positive case, from the block 114 (current operating condition of the engine 1 in one of the zones 51) it leads to a block 120 which commands calculation of the corrected injection time TJ" by modification of the previously determined injection time TJ' multiplied by the correction coefficient KADAT memorised in the main memory RAM 39 at the address ADDRNW of a zone 50 adjacent to the zone 51 of current operation of the engine. Both from the block 119 and from the block 120 it then exits from the block 96.

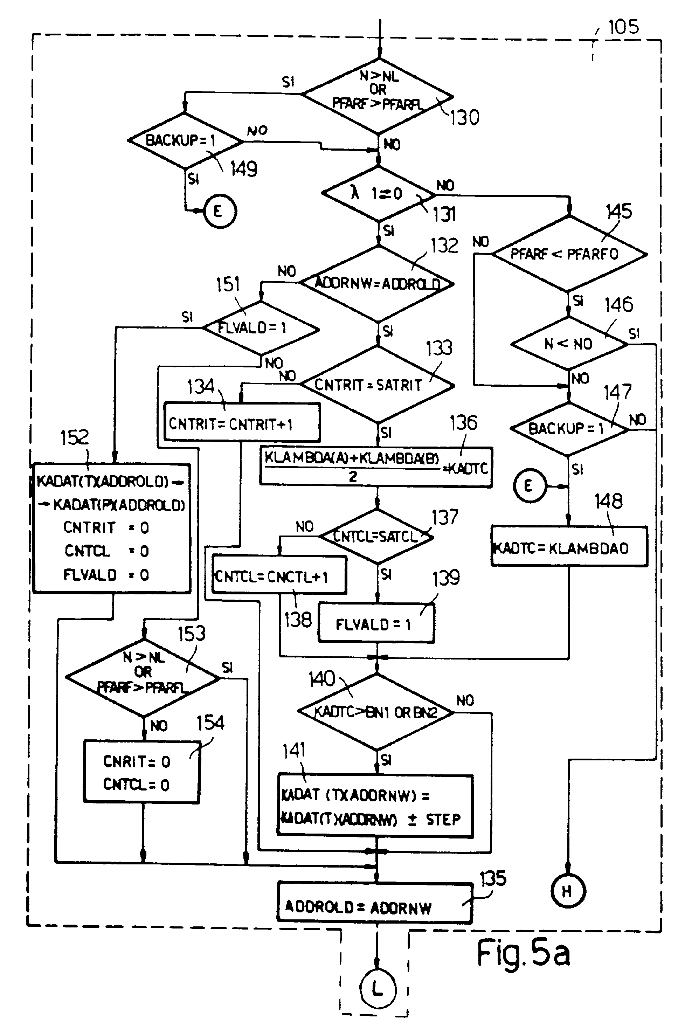

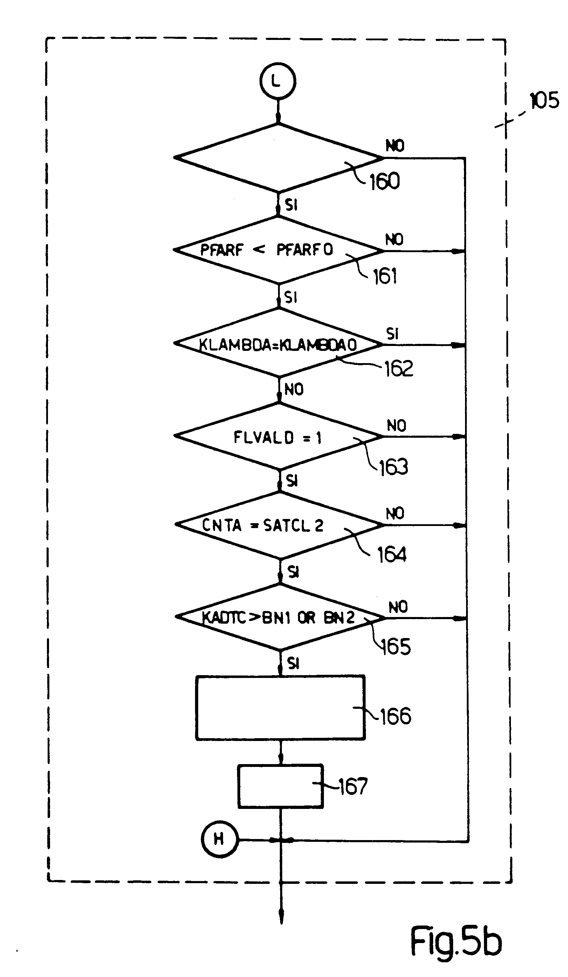

In Figures 5a and 5b there is illustrated in greater detail the block 105 which effects calculation of the updating of the correction factors KADAT. In particular the programme leads to a block 130 (Figure 5A) which detects, in a manner similar to the block 116 of Figure 3, if the current value of the parameters N or PFARF are greater than the limit values NL and PFARFL respectively; if not (current operating condition of the engine 1 in one of the zones 50) then it leads to a block 131 which detects if there has been a commutation of the signal 24 from the sensor 25 between the levels 0 and 1 (conditions of Figures 6a or 6b) and if so it leads to a block 132 which detects if the address ADDRNW selected by the block 95 of Figure 3 is the same as that which was selected in the preceding cycle of the programme. In the positive case (stable operating conditions of engine 1 in the same zone of the N-PFARF plane of Figure 7b) it leads to a block 133 which detects if a counter CNTRIT has reached a value SATRIT memorised in the EPROM 41: in the negative case it leads to a block 134 which increments by one unit the count value of this counter CNTRIT, putting CNTRIT = CNTRIT+1, then it leads to a block 135 which memorises in a register ADDROLD the current address ADDRNW selected by the block 95 of Figure 3, for the purpose of comparing in the next cycle if the motor 1 has remained in the same region of the N-PFARF plane of Figure 7B or not. In the case of positive conditions detected by the block 133 (indication that the operating conditions of the engine 1 have remained for a sufficient time in the same zone of the N-PFARF plane of Figure 7b) it leads to a block 136 which calculates the value of the constant component (KADTDC) of the correction coefficient KLAMBDA (Figure 6b) as the mean of the values of this coefficient at the last two commutations (A;B) of the signal 24 from the sensor 25. From the block 136 it then leads to a block 137 which detects if a second counter CNTCL has reached a respective value SATCL, also memorised in the EPROM 41: if not it leads to a block 138 which increments by one unit the count value of this counter CNTCL, putting CNTCL=CNTCL+1, then leads on to a block 140 which detects if the value of the constant component (KADTDC) of the correction coefficient KLAMBDA (Figure 6b), calculated by the block 136, is greater than respective threshold values BN1 and BN2 differentiated as positive and negative values, and memorised in the EPROM 41. In the negative case it leads from the block 140 directly to the block 135 thus exiting from the updating of the correction coefficient KADAT, whilst in the positive case it leads to the block 135 via a block 141 which modifies the value of the correction coefficient KADAT contained in the temporary memory RAM 38, at the address ADDRNW, by a quantity STEP memorised in the EPROM 41.

In the case of positive conditions detected by the block 137 (indicating that the operating conditions of the engine 1 have remained in the same zone of the N-PFARF plane of Figure 7b for a further sufficient time) it leads to a block 139 which sets the indicator FLVALD=1, indicative of the conditions of agreement to memorisation of the correction coefficient KADAT from the temporary memory RAM 38 at the corresponding address ADDRNW in the principal memory RAM 39. From block 139 it then leads to block 140.

In the case of negative conditions detected by the block 131 (such that there is no commutation of the values of the signal from the exhaust gas sensor 25) it leads to a block 145 which detects if the current value of the parameter PFARF is less than a lower limit value PFARF0 (corresponding to a position of minimum opening of the butterfly valve 6): if so (release of the accelerator pedal 8) it leads to a block 146 which detects if the current value of the parameter N is less than a lower limit value N0 (corresponding to a minimum speed of rotation of the engine 1). From the positive condition of the block 146 it exits from block 105, these not being the conditions of detection of a change in the coefficient KADAT, whilst both in the case of the negative condition detected by the block 145 and in the case of the negative condition detected by the block 146 it leads to a block 147 which detects if the indicator BACKUP=1 (indicating the command for immediate memorisation of the coefficient KADAT in the main RAM 39): in the negative case it exits from the block 105, whilst in the positive case (closed loop control in saturation conditions) it leads to a block 148 which sets the value of the constant component (KADTDC) of the correction coefficient KLAMBDA (Figure 6c) as equal to the value of this coefficient in saturation conditions (KLAMBDA0), and then leads to the block 140 for calculation of the progressive modification of the correction coefficient KADAT even in these saturation conditions.

If a positive condition is detected by the block 130 (current operating condition of the engine 1 in one of the zones 51) then it leads to a block 149 which detects if the indicator BACKUP=1 (indicating the command for immediate memorisation of the coefficient KADAT in the main RAM 39): in the negative case it leads to the block 131, whilst in the positive case (closed loop control in saturation conditions) it leads to the block 148.

In the case of a negative condition detected by the block 132 (zone of operation of the engine 1 varied from the zone of the N-PFARF plane of Figure 7b) addressed in the preceding cycle) it leads to a block 151 which detects if the indicator FLVALD=1: in the positive case (indicative of the conditions of agreement to memorisation of the correction coefficient KADAT in the temporary memory RAM 38 at the corresponding address ADDRNW in the principal memory RAM 39) it leads to a block 152 which commands the effective memorisation of the correction coefficient KADAT from the temporary memory RAM 38 into the principal memory RAM 39, at the corresponding address ADDROLD for calculation and progressive updating in the same zone as in the preceding cycle, moreover the block 152 zeros the contents of the counters CNTRIT and CNTCL, and sets the indicator FLVALD=0, indicating that memorisation of the coefficient KADAT in the RAM 39 has occurred. From block 152 it then leads to the block 135. In the case of a negative condition detected by the block 151 (absence of conditions of agreement to memorisation of the correction coefficient KADAT in the principal memory RAM 39) it leads to a block 153 which detects, in a manner similar to block 130, if the current value of the parameter N or of the parameter PFARF is greater than the limit value respectively NL and PFARFL; in the negative case (current operating condition of the engine 1 in one of the zones 50) then it leads to a block 154 which zeros the contents of counters CNTRIT and CNTCL to initiate a new phase enabling modification of the correction coefficients, and then leads to the block 135, whilst in the case of a positive condition detected by the block 153 (indicating passage of the operation of the engine 1 into a zone 51 adjacent the zone 50 in which it was previously operating, and therefore where the correction coefficient was previously modified) it leads directly to the block 135 to allow a continuation of the progressive updating of this correction coefficient which, as already previously explained, is the same for a zone 50 as for the adjacent zone 51.

From the block 135 it leads to a block 160 (Figure 5b) which, according to the present invention, constitutes the beginning of a sequence for calculating the estimate of the various correction coefficients KADAT for the various zones 50, following the calculation effected for a first coefficient KADAT of a zone 50 in the slow running conditions of the engine 1; in particular the block 160 detects, with an initial indicator not yet zeroed, if the calculation programme relates to the first cycle of execution of the control strategy of the injection system, and in the negative case exits from the block 105, whilst in the positive case follows this sequence and leads to a block 161 which detects if the current value of the parameter PFARF is less than a lower limit value PFARF0 (corresponding to a minimum opening position of the butterfly valve 6). In the negative case it exits from block 105, whilst in the positive case it leads to a block 162 which detects if the closed loop control system is in saturation conditions (Figure 6c) evaluating if the correction coefficient KLAMBDA calculated by the block 102 of Figure 3 has reached the limit value KLAMBDA0, and in the positive case exits from the block 105, whilst in the negative case it leads to a block 163 which detects if the indicator FLVALD=1, indicative of the condition of consent to memorisation of the correction coefficient KADAT in the principal memory RAM 39 in the said slow running conditions of operation. In the case of the negative condition detected by the block 163 it exits from block 105, whilst in the positive case it leads to a block 164 which detects if a third counter CNTA, activated together with the counter CNTCL, has reached a respective value SATCLT, also memorised in the EPROM 41, greater than the value CATCL, so as to guarantee a further delay time: in the negative case it exits from the block 105, whilst in the positive case it leads to a block 165 which detects if the value of the constant component (KADTDC) of the correction coefficient KLAMBDA (Figure 6b) calculated by the block 136 for the said slow running conditions, is greater than the respective threshold values BN1 and BN2; in the negative case it exits from block 105, whilst in the positive case it leads to a block 166 which calculates on the basis of this initial value KADAT calculated by the block 141 for the said slow running conditions, values corresponding to the other coefficients KADAT for the other zones 50, and these values can be determined as a percentage (variable for example between 100% and 50%, with the choice effected by means of reference values on the EPROM 41) of the value of this slow running adaptation coefficient KADAT; in particular, these values KADAT for the zones 50 which are further from the slow running region of operation can be reduced proportionately towards the 50% values; these coefficients KADAT for the other zones 50 are also memorised in the RAM 39 of the non-volatile memory.

From the block 166 it leads then to a block 167 which commands zeroing of the indicator for execution of the said cycle from the positive condition of the block 160, and zeroing of the counter CNTA; then it exits from the block 105.

The advantages of the electronic fuel injection system of the present invention are evident from what has been described, in fact with a relatively simple central control unit 16 one has a low cost self-adjusting system which is of satisfactory operation with errors in the actuated injection time contained within very small limits. In particular, it is a very advantageous characteristic that the number of updatable correction coefficients KADAT is less than the number of calculation zones for the basic injection times TJ, and they are referred only to a very small field within the operating area of the engine 1 so as to be able to reduce the capacity of the RAM 39, whilst still being able, however, to obtain corresponding coefficients in a relatively simple and sufficiently true manner for the whole of the working region of the engine 1. Moreover, whilst these adaptation coefficients KADAT are continually updated in the temporary memory RAM 38 (when the conditions of steadiness of the engine 1 and closed loop control of the exhaust gas concentration by means of the sensor 25 exist) and are normally transferred into the RAM 39 of the main memory only when the zone 50 (Figure 7b) in which the engine has just been operating changes, this transfer is immediately commanded when the correction coefficient KLAMBDA determined by means of the signal from the sensor 25 reaches the limit value KLAMBDA0, indicating the necessity for a relatively large modification in the basic injection time TJ calculated in nominal initial conditions. In terms of operative simplification of the central processing unit 36, and self-adjustment of the system at the end of assembly and testing lines, the characteristic of initial assignation of the value of the correction coefficients KADAT for the various zones 50 (Figure 7b) addressable in the various cells of the RAM 39, for protection of the value KADAT calculated at first for the slow running conditions of the engine is particularly advantageous.

## Claims

1. An electronic fuel injection system for internal combustion engines (1), comprising an electronic central control unit (16) including a central processor (36) receiving information signals (20, 22, 24) at least from means (21) for detecting the speed of rotation of the engine (1), from means (23) for detecting the position of a valve (6) for adjusting the quantity of air supplied to the said engine (1) and from means (25) sensitive to the exhaust gas from the said engine (1), in which the said central processing unit (36) includes first means (93) for open loop calculation of a basic injection time (TJ) in dependence on the said information signals (20, 22) from the said means (21) for detecting the speed of rotation of the said engine and from the said means (23) for detecting the position of the said valve (6) for adjusting the quantity of air supplied to the said engine, defining a working region of the said engine, second means (94) for correction of the said basic injection time (TJ) in dependence of other detected engine parameters, third means (102) for closed loop calculation of first correction factors (KLAMBDA) of the said basic injection time (TJ) also in dependence on the said information signals (24) from the said means (25) for detecting the exhaust gas, fourth means (103) for correction of the said basic injection time (TJ) in dependence on the said first correction factors (KLAMBDA), fifth means (105) for calculation and automatic modification in memory means (38, 39) of second correction factors (KADAT) of the said basic injection time (TJ) in dependence on the said first correction factors (KLAMBDA), and sixth means (96) for correction of the said basic injection time (TJ) in dependence on the said second correction factors (KADAT), the said second correction factors (KADAT) which can be automatically modified by the said system being fewer in number than the number of zones (50, 51) of sub-division of a working region of the said engine (1) for the selection of the said second correction factors (KADAT), the said zones (50, 51) being addressable by address means (95) in dependence on the said information signals (20, 22) from the said means (21) for detecting the speed of rotation of the said engine and from said means (23) for detection of the position of the said valve (6) for adjustment of the quantity of air supplied to the said engine, characterised by the fact that the said second and automatically modifiable correction factors (KADAT), below predetermined values (NL, PFARFL) of the speed of rotation of the said engine (1) and of the opening position of the said valve (6) for adjustment of the quantity of air supplied to the said engine, are addressable in the said reading and writing memory means (38, 39) in direct correspondence with the said zones (50) into which the said working region of the said engine (1) is sub-divided, and in that the said second automatically modifiable correction factors (KADAT), above predetermined values (XL, PFARFL) of the speed of rotation of the said engine (1) and of the opening position of the said valves (6) for adjustment of the quantity of air supplied to the said engine, are selectable in the said reading and writing RAM memory means (38, 39) in correspondence with zones (50) adjacent to addressed zones (51) into which the said operating region of the said engine (1) is sub-divided.

2. A system according to claim 1, characterised by the fact that the said fifth means (105) for calculation and automatic modification of the said second correction factors (KADAT) of the said basic injection time (TJ), are operatively enabled by means (104) for verifying the existence of conditions of steadiness in the operating conditions of the said engine (1), and by the operation of the said third, closed loop calculation means (102) for calculating the said first correction factors (KLAMBDA) of the said basic injection time (TJ), and include means (136, 140, 141, 38) for updating and temporary memorisation of the said second correction factors (KADAT), means (139) for enabling the stable updating of the said second correction factors (KADAT) in the said memory means (39), and means (152) for commanding the effective updating of the said second correction factors (KADAT) is the said memory means (39).

3. A system according to Claim 2, characterised by the fact that the said means (136, 140, 141, 38) for updating and temporary memorisation of the said second correction factors (KADAT) are operatively enabled by means (132) for verifying the permanency of the address (ADDRNW) from the said address means (95) in the same one of the said zones (50, 51) of the sub-division of the working region of the said engine (1).

4. A system according to Claim 3, characterised by the fact that the said means (136, 140, 141, 38) for updating and temporary memorisation of the said second correction factors (KADAT) are operatively enabled by subsequent means (133) for verifying the achievement of a predeterminable stage.

5. A system according to any of Claims from 2 to 4, characterised by the fact that the said sixth means (96) for correction of the said basic injection time (TJ) in dependence on the said second correction factors (KADAT), comprise means (111) operative to detect the existence of upper limit values (KLAMBDA0) of the said first correction factors (KLAMBDA), consequently to command an immediate effective updating of the said second correction factors (KADAT) in the said memory means (39) by the said temporary memorisation means (38) of the said second correction factors (KADAT).

6. A system according to Claim 5, characterised by the fact that the said means (38) for temporary memorisation of the said updated second correction factors (KADAT) are operatively enabled at intervals of respective different time, by means (131) for verifying the variation of the said information signals (24) by the said means (25) for detecting the exhaust gas, and by means (147) for verifying the existence of the said command for immediate effective updating of the said second correction factors (KADAT) is the said memory means (39).

7. A system according to any of Claims from 2 to 6, characterised by the fact that the said means for temporary updating of the said second correction factors (KADAT) include means (136; 148) for calculation of a mean value (KADTC) of the said first correction factor (KLAMBDA), means (140) for comparison of the said mean value (KADTC) with predeterminable threshold values for enabling means (141) for modifying the said second correction factor (KADAT) in the said temporary memory means (38) by a predeterminable quantity and consequent sign.

8. A system according to any of Claims from 2 to 7, characterised by the fact that the said means (139) for enabling the stable updating of the said second correction factors (KADAT) is the said memory means (39) are operatively enabled by means (137) for verifying the achievement of a predetermined stage subsequent to initiation of the calculation operation with the said means (136, 140, 141) for temporary updating of the said second correction factors (KADAT).

9. A system according to any of Claims from 2 to 8, characterised by the fact that the said means (152) for commanding effective updating of the said second correction factors (KADAT) in the said memory means (39) are operatively enabled by means (132) for verifying the change of address (ADDRNW) of the said zones (50, 51) of sub-division of the operating region of the said engine (1).

10. A system according to any preceding Claim, characterised by the fact that the said central processing unit (36) includes seventh means (166) for calculation for the said memory means (39) of initial values of the said second correction factors (KADAT) of the said basic injection time (TJ) in dependence on an initial value calculated by the said fifth means (105) relating to one of the said zones (50) of sub-division of the said working region of the said engine (1).

11. A system according to Claim 10, characterised by the fact that the said initial value calculated by the said fifth means (105) relates to the slow running operation of the said engine (1).

12. A system according to Claim 10 or Claim 11, characterised by the fact that the said seventh calculation means (166) are operatively enabled by means (160) for sensing the first working cycle of the said engine (1) after initial electrical supply to the said central control unit (16).

13. A system according to Claim 12, characterised by the fact that the said seventh calculation means (166) are operatively enabled by successive first means (162) for verifying the condition of non-achievement of upper limit values (KLAMBDA0) of the said first correction factors (KLAMBDA), second means (164) for verifying achievement of a predeterminable stage, subsequent to commencement of the operation of the said calculation means (136, 140, 141) for temporary updating of the said second correction factor (KADAT), and third means (165) for verifying that the mean value (KADTC) of the said first correction factor exceeds predetermined threshold values.

14. A system according to any of Claims from 10 to 13, characterised by the fact that the said seventh means (166) calculate the said initial values of the said second correction factors (KADAT) of the said basic injection time (TJ) in dependence on the percentage variations from the said initial value calculated by the said fifth means (105).

15. A system according to Claim 14, characterised by the fact that the said percentage variations from the said initial value calculated by the said fifth means (105) increase with an increase in the distance of the said respective zones (50) of sub-division of the said working region of the said engine (1) from the said reference zone (50) used in calculation of the said initial value.

16. A system according to any preceding Claim, characterised by the fact that the said central processing unit (36) includes means (81) for detecting the first working cycle of the said engine (1) after initial electrical connection of the said central processing unit (16) for consequently commanding the loading of the said second correction factors (KADAT) into the said memory means (39) from corresponding addresses of an auxiliary collection memory (40), the said means (81) for detecting the simple condition of the first working cycle of the said engine (1) being adapted to command the loading of the said second correction factors (KADAT) from the said memory means (39) into the corresponding addresses of the said auxiliary collection memory (40), at the addresses corresponding to the said second correction factors (KADAT) which differ by a predetermined threshold.

17. A system according to any preceding Claim, characterised by the fact that the said central processing unit (36) receives information signals also from means (27) for detecting the temperature of the engine coolant liquid, and from means (17) for detecting the temperature of air supplied to the said engine.

18. A system according to any preceding Claim, characterised by the fact that the said electronic central processing unit (16) controls a single point injector unit (4).

## Patentansprüche

1. Ein elektronisches Kraftstoffeinspritzsystem für Verbrennungsmotoren (1), mit einer elektronischen zentralen Steuereinheit (16), die einen Zentralprozessor (36) enthält, der Informationssignale (20, 22, 24) wenigstens von einer Einrichtung (21) zur Erfassung der Drehzahl des Motors (1), von einer Einrichtung (23) zur Erfassung der Position einer Klappe (6) zur Einstellung der Menge der dem Motor (1) zugeführten Luft und von einer Einrichtung (25), die auf das Abgas vom Motor (1) anspricht, empfängt, wobei in der elektronischen zentralen Steuereinheit (16) die Zentralprozessoreinheit (36) versehen ist mit einer ersten Einrichtung (93) zur Berechnung einer Basis-Einspritzzeit (TJ) in offenem Regelkreis in Abhängigkeit von den Informationssignalen (20, 22) von der Einrichtung (21) zur Erfassung der Drehzahl des Motors und von der Einrichtung (23) zur Erfassung der Position der Klappe (6) zur Einstellung der Menge der dem Motor zugeführten Luft, wodurch ein Arbeitsbereich des Motors definiert wird, einer zweiten Einrichtung (94) zur Korrektur der Basis-Einspritzzeit (TJ) in Abhängigkeit von anderen erfaßten Motorparametern, einer dritten Einrichtung (102) zur Berechnung in geschlossenem Regelkreis von ersten Korrekturfaktoren (KLAMBDA) der Basis-Einspritzzeit (TJ) auch in Abhängigkeit von den Informationssignalen (24) von der Einrichtung (25) zur Erfassung des Abgases, einer vierten Einrichtung (103) zur Korrektur der Basis-Einspritzzeit (TJ) in Abhängigkeit von den ersten Korrekturfaktoren (KLAMBDA), einer fünften Einrichtung (105) zur Berechnung und automatischen Modifikation von zweiten Korrekturfaktoren (KADAT) der Basis-Einspritzzeit (TJ) in Abhängigkeit von den ersten Korrekturfaktoren (KLAMBDA) in Speichereinrichtungen (38, 39) und einer sechsten Einrichtung (96) zur Korrektur der Basis-Einspritzzeit (TJ) in Abhängigkeit von den zweiten Korrekturfaktoren (KADAT), wobei die Anzahl der zweiten Korrekturfaktoren (KADAT), die von dem System automatisch modifiziert werden können, kleiner als die Anzahl der Zonen (50, 51) der Unterteilung eines Arbeitsbereichs des Motors (1) für die Wahl der zweiten Korrekturfaktoren (KADAT) ist, wobei die Zonen (50, 51) durch eine Adresseneinrichtung (95) in Abhängigkeit von den Informationssignalen (20, 22) von der Einrichtung (21) zur Erfassung der Drehzahl des Motors und von der Einrichtung (23) zur Erfassung der Position der Klappe (6) zur Einstellung der Menge der dem Motor zugeführten Luft adressierbar sind, dadurch gekennzeichnet, daß die zweiten, automatisch modifizierbaren Korrekturfaktoren KADAT) unterhalb von vorgegebenen Werten (NL, PFARFL) der Drehzahl des Motors (1) und der Öffnungsposition der Klappe (6) zur Einstellung der Menge der dem Motor zugeführten Luft in den Lese- und Schreib-Speichereinrichtungen (38, 39) in direkter Entsprechung mit den Zonen (50), in die der Arbeitsbereich des Motors (1) unterteilt ist, adressiert werden können und daß die zweiten, automatisch modifizierbaren Korrekturfaktoren (KADAT) oberhalb vorgegebener Werte (NL, PFARFL) der Drehzahl des Motors (1) und der Öffnungsposition der Klappe (6) zur Einstellung der Menge der dem Motor zugeführten Luft in den Lese- und Schreib-RAM-Speichereinrichtungen (38, 39) in Entsprechung mit Zonen (50), die an die adressierten Zonen (51) angrenzen, in die der Betriebsbereich des Motors (1) unterteilt ist, gewählt werden können.

2. Ein System gemäß Anspruch 1, dadurch gekennzeichnet, daß der Betrieb der fünften Einrichtung (105) zur Berechnung und automatischen Modifikation der zweiten Korrekturfaktoren (KADAT) der Basis-Einspritzzeit (TJ) durch eine Einrichtung (104) zur Verifikation des Vorhandenseins von Stabilitätszuständen in den Betriebszuständen des Motors (1) und durch die Funktion der dritten Recheneinrichtung (102) mit geschlossenem Regelkreis zur Berechnung der ersten Korrekturfaktoren (KLAMBDA) der Basis-Einspritzzeit (TJ) freigegeben wird und daß die fünfte Einrichtung (105) Einrichtungen (136, 140, 141, 38) zur Aktualisierung und temporären Speicherung der zweiten Korrekturfaktoren (KADAT), eine Einrichtung (139) zur Freigabe der stabilen Aktualisierung der zweiten Korrekturfaktoren (KADAT) in der Speichereinrichtung (39) und eine Einrichtung (152) zum Befehlen der effektiven Aktualisierung der zweiten Korrekturfaktoren (KADAT) in der Speichereinrichtung (39) enthält.

3. Ein System gemäß Anspruch 2, dadurch gekennzeichnet, daß der Betrieb der Einrichtungen (136, 140, 141, 38) zur Aktualisierung und temporären Speicherung der zweiten Korrekturfaktoren (KADAT) durch eine Einrichtung (132) zur Verifikation des ständigen Vorhandenseins der Adresse (ADDRNW) der Adresseneinrichtung (95) in derselben der Zonen (50, 51) der Unterteilung des Arbeitsbereichs des Motors (1) freigegeben wird.

4. Ein System gemäß Anspruch 3, dadurch gekennzeichnet, daß der Betrieb der Einrichtungen (136, 140, 141, 38) zur Aktualisierung und temporären Speicherung der zweiten Korrekturfaktoren (KADAT) durch eine nachfolgende Einrichtung (133) zur Verifikation der Erreichung einer vorbestimmbaren Stufe freigegeben wird.

5. Ein System gemäß einem der Ansprüche 2 bis 4, dadurch gekennzeichnet, daß die sechste Einrichtung (96) zur Korrektur der Basis-Einspritzzeit (TJ) in Abhängigkeit von den zweiten Korrekturfaktoren (KADAT) eine Einrichtung (111) umfaßt, um das Vorhandensein von oberen Grenzwerten (KLAMBDA0) der ersten Korrekturfaktoren (KLAMBDA) zu erfassen und folglich eine sofortige effektive Aktualisierung der zweiten Korrekturfaktoren (KADAT) in der Speichereinrichtung (39) durch die temporäre Speichereinrichtung (38) der zweiten Korrekturfaktoren (KADAT) zu befehlen.

6. Ein System gemäß Anspruch 5, dadurch gekennzeichnet, daß der Betrieb der Einrichtung (38) zur temporären Speicherung der aktualisierten zweiten Korrekturfaktoren (KADAT) in jeweils verschiedenen Zeitintervallen durch eine Einrichtung (131) zur Verifikation der Änderung der Informationssignale (24) von der Einrichtung (25) zur Erfassung des Abgases und durch eine Einrichtung (147) zur Verifikation des Vorhandenseins des Befehls zur sofortigen effektiven Aktualisierung der zweiten Korrekturfaktoren (KADAT) in der Speichereinrichtung (39) freigegeben wird.

7. Ein System gemäß einem der Ansprüche 2 bis 6, dadurch gekennzeichnet, daß die Einrichtung zur temporären Aktualisierung der zweiten Korrekturfaktoren (KADAT) Einrichtungen (136; 148) zur Berechnung eines Mittelwertes (KADTC) der ersten Korrekturfaktoren KLAMBDA) und eine Einrichtung (140) zum Vergleichen des Mittelwertes (KADTC) mit vorbestimmbaren Schwellenwerten für eine Freigabeinrichtung (141) für die Modifikation der zweiten Korrekturfaktoren (KADAT) in der temporären Speichereinrichtung (38) mit einer vorgegebenen Größe und dem entsprechenden Vorzeichen enthält.

8. Ein System gemäß einem der Ansprüche 2 bis 7, dadurch gekennzeichnet, daß der Betrieb der Einrichtung (139) zur Freigabe der stabilen Aktualisierung der zweiten Korrekturfaktoren (KADAT) in der Speichereinrichtung (39) durch eine Einrichtung (137) zur Verifikation der Erreichung einer vorgegebenen Stufe nach der Initialisierung des Rechenbetriebs der Einrichtungen (136, 140, 141) zur temporären Aktualisierung der zweiten Korrekturfaktoren (KADAT) freigegeben wird.

9. Ein System gemäß einem der Ansprüche 2 bis 8, dadurch gekennzeichnet, daß der Betrieb der Einrichtung (152) zum Befehlen der effektiven Aktualisierung der zweiten Korrekturfaktoren (KADAT) in der Speichereinrichtung (39) durch eine Einrichtung (132) zur Verifikation der Änderung der Adresse (ADDRNW) der Zonen (50, 51) der Unterteilung des Betriebsbereichs des Motors (1) freigegeben wird.

10. Ein System gemäß einem der vorangehenden Ansprüche, dadurch gekennzeichnet, daß die Zentralprozessoreinheit (36) eine siebte Einrichtung (166) aufweist, die für die Speichereinrichtung (39) Anfangswerte der zweiten Korrekturfaktoren (KADAT) der Basis-Einspritzzeit (TJ) in Abhängigkeit von einem Anfangswert berechnet, der von der fünften Einrichtung (105) mit Bezug auf eine der Zonen (50) der Unterteilung des Arbeitsbereichs des Motors (1) berechnet worden ist.

11. Ein System gemäß Anspruch 10, dadurch gekennzeichnet, daß sich der von der fünften Einrichtung (105) berechnete Anfangswert auf den Langsamlauf-Betrieb des Motors (1) bezieht.

12. Ein System gemäß Anspruch 10 oder Anspruch 11, dadurch gekennzeichnet, daß der Betrieb der siebten Recheneinrichtung (166) durch eine Einrichtung (160) zur Erfassung des ersten Arbeitszyklus des Motors (1) nach einer anfänglichen elektrischen Versorgung der zentralen Steuereinheit (16) freigegeben wird.

13. Ein System gemäß Anspruch 12, dadurch gekennzeichnet, daß der Betrieb der siebten Recheneinrichtung (166) nacheinander durch eine erste Einrichtung (162) zur Verifikation des Zustandes der Nichterreichung der oberen Grenzwerte (KLAMBDA0) der ersten Korrekturfaktoren (KLAMBDA), durch eine zweite Einrichtung (164) zur Verifikation der Erreichung einer vorgebbaren Stufe nach dem Beginn des Betriebs der Recheneinrichtungen (136, 140, 141) zur temporären Aktualisierung der zweiten Korrekturfaktoren (KADAT) und durch eine dritte Einrichtung (165) zur Verifikation der Tatsache, daß der Mittelwert (KADTC) der ersten Korrekturfaktoren vorgegebene Schwellenwerte übersteigt, freigegeben wird.

14. Ein System gemäß einem der Ansprüche 10 bis 13, dadurch gekennzeichnet, daß die siebte Einrichtung (166) die Anfangswerte der zweiten Korrekturfaktoren (KADAT) der Basis-Einspritzzeit (TJ) in Abhängigkeit von prozentualen Veränderungen gegenüber dem von der fünften Einrichtung (105) berechneten Anfangswert berechnet.

15. Ein System gemäß Anspruch 14, dadurch gekennzeichnet, daß die prozentualen Veränderungen gegenüber dem von der fünften Einrichtung (105) berechneten Anfangswert bei einer Zunahme des Abstandes der entsprechenden Zonen (50) der Unterteilung des Arbeitsbereichs des Motors (1) von der bei der Berechnung des Anfangswertes verwendeten Referenzzone (50) ansteigen.

16. Ein System gemäß einem der vorangehenden Ansprüche, dadurch gekennzeichnet, daß die Zentralprozessoreinheit (36) eine Einrichtung umfaßt, die den ersten Arbeitszyklus des Motors (1) nach der anfänglichen elektrischen Verbindung der Zentralprozessoreinheit (16) erfaßt, um anschließend die zweiten Korrekturfaktoren (KADAT) aus entsprechenden Adressen eines Hilfs-Sammelspeichers (40) in die Speichereinrichtung (39) zu laden, wobei die Einrichtung (81) zur Erfassung der einfachen Bedingung des ersten Arbeitszyklus des Motors (1) so beschaffen ist, daß sie das Laden der zweiten Korrekturfaktoren (KADAT) aus der Speichereinrichtung (39) in entsprechende Adressen des Hilfs-Sammelspeichers (40) befiehlt, wobei diese Adressen den zweiten Korrekturfaktoren (KADAT) entsprechen, die sich um einen vorgegebenen Schwellenwert unterscheiden.

17. Ein System gemäß einem der vorangehenden Ansprüche, dadurch gekennzeichnet, daß die Zentralprozessoreinheit (36) Informationssignale auch von einer Einrichtung (27) zur Erfassung der Temperatur der Motor-Kühlflüssigkeit und von einer Einrichtung (17) zur Erfassung der Temperatur der dem Motor zugeführten Luft empfängt.

18. Ein System gemäß einem der vorangehenden Ansprüche, dadurch gekennzeichnet, daß die elektronische Zentralprozessoreinheit (16) eine Einzelpunkt-Einspritzeinheit (4) steuert.

## Revendications

1. Système d'injection électronique de carburant pour moteurs à combustion interne (1), comprenant une unité centrale électronique de commande (16) comportant un processeur central (36) recevant des signaux d'information (20, 22? 24) au moins d'un moyen (21) de détection de la vitesse de rotation du moteur (1), d'un moyen (23) de détection de la position d'un papillon (6) de réglage de la quantité d'air fournie au moteur (1) et d'un moyen (25) sensible aux gaz d'échappement du moteur (1), dans lequel l'unité centrale de traitement (36) comporte un premier moyen (93) pour le calcul en chaine ouverte d'un temps d'injection de base (TJ) en fonction des signaux d'information (20, 22) émanant du moyen (21) de détection de la vitesse de rotation du moteur et du moyen (23) de détection de la position du papillon (6) de réglage de la quantité d'air fournie au moteur, définissant une région de fonctionnement du moteur, un deuxième moyen (94) pour la correction du temps d'injection de base (TJ) en fonction d'autres paramètres détectés du moteur, un troisième moyen (102) pour le calcul en boucle fermée de premiers facteurs de correction (KLAMBDA) du temps d'injection de base (TJ) également en fonction des signaux d'information (24) émanant du moyen (25) de détection des gaz d'échappement, un quatrième moyen (103) pour la correction du temps d'injection de base (TJ) en fonction des premiers facteurs de correction (KLAMBDA), un cinquième moyen (105) pour le calcul et la modification automatique dans des mémoires (38, 39) de seconds facteurs de correction (KADAT) du temps d'injection de base (TJ) en fonction des premiers facteurs de correction (KLAMBDA), et un sixième moyen (96) pour la correction du temps d'injection de base (TJ) en fonction des seconds facteurs de correction (KADAT), ces seconds facteurs de correction (KADAT), qui peuvent être modifiés automatiquement par le système, étant moins nombreux que les zones (50, 51) de subdivision d'une région de fonctionnement du moteur (1) pour la sélection des seconds facteurs de correction (KADAT), ces zones (50, 51) étant adressables par un moyen d'adressage (95) en fonction des signaux d'information (20, 22) émanant du moyen (21) de détection de la vitesse de rotation du moteur et du moyen (23) de détection de la position du papillon (6) de réglage de la quantité d'air fournie au moteur, caractérisé par le fait que les seconds facteurs de correction, modifiables automatiquement (KADAT), au-dessous de valeurs déterminées (NL, PFARFL) de la vitesse de rotation du moteur (1) et de la position d'ouverture du papillon (6) de réglage de la quantité d'air fournie au moteur, sont adressables dans les mémoires à lecture-écriture (38, 39) en correspondance directe avec les zones (50) en lesquelles la région de fonctionnement du moteur (1) est subdivisée, et que les seconds facteurs de correction, modifiables automatiquement (KADAT), au-dessus de valeurs déterminées (NL, PFARFL) de la vitesse de rotation du moteur (1) et de la position d'ouverture du papillon (6) de réglage de la quantité d'air fournie au moteur, sont sélectionnables dans les mémoires RAM lecture-écriture (38, 39) en correspondance avec des zones (50) contiguës à des zones adressées (51) en lesquelles la région de fonctionnement du moteur (1) est subdivisée.

2. Système selon la revendication 1, caractérisé par le fait que le cinquième moyen (105) pour le calcul et la modification automatique des seconds facteurs de correction (KADAT) du temps d'injection de base (TJ) est autorisé à agir par un moyen (104) de vérification de l'existence de conditions de stabilité du régime du moteur (1), et par le fonctionnement du troisième moyen (102) pour le calcul en boucle fermée des premiers facteurs de correction (KLAMBDA) du temps d'injection de base (TJ), et comporte des moyens (136, 140, 141, 38) de mise à jour et de stockage temporaire des seconds facteurs de correction (KADAT), un moyen (139) d'autorisatin de la mise à jour stable des seconds facteurs de correction (KADAT) dans la mémoire (39), et un moyen (152) de commandement de la mise à jour effective des seconds facteurs de correction (KADAT) dans cette mémoire (39).

3. Système selon la revendication 2, caractérisé par le fait que les moyens (136, 140, 141, 38) de mise à jour et de stockage temporaire des seconds facteurs de correction (KADAT) sont autorisés à agir par un moyen (132) de vérification de la permanence de l'adresse (ADDRNW) émanant du moyen d'adressage (95) dans la même des zones (50, 51) de subdivision de la région de fonctionnement du moteur (1).

4. Système selon la revendication 3, caractérisé par le fait que les moyens (136, 140, 141, 38) de mise à jour et de stockage temporaire des seconds facteurs de correction (KADAT) sont autorisés à agir par un moyen suivant (133) de vérification de l'atteinte d'un stade prédéterminable.

5. Système selon l'une des revendications 2 à 4, caractérisé par le fait que le sixième moyen (96) pour la correction du temps d'injection de base (TJ) en fonction des seconds facteurs de correction (KADAT) comprend un moyen (111) destiné à détecter l'existence de valeurs limites supérieures (KLAMBDA0) des premiers facteurs de correction (KLAMBDA) pour commander en conséquence une mise à jour effective immédiate des seconds facteurs de correction (KADAT) dans la mémoire (39) par le moyen (38) de stockage temporaire des seconds facteurs de correction (KADAT).

6. Système selon la revendication 5, caractérisé par le fait que le moyen (38) de stockage temporaire des seconds facteurs de correction mis à jour (KADAT) es autorisé à agir à des intervalles de durée différente par un moyen (131) de vérification de la variation des signaux d'information (24) produits par le moyen (25) de détection des gaz d'échappement, et par un moyen (147) de vérification de l'existence de l'ordre de mise à jour effective immédiate des seconds facteurs de correction (KADAT) dans la mémoire (39).

7. Système selon l'une des revendications 2 à 6, caractérisé par le fait que le moyen de mise à jour temporaire des seconds facteurs de correction (KADAT) comporte des moyens (136 ; 148) de calcul d'une valeur moyenne (KADTC) du premier facteur de correction (KLAMBDA) et un moyen (140) de comparaison de cette valeur moyenne (KADTC) à de seuils prédéterminables pour autoriser l'action d'un moyen (141) de modification du second facteur de correction (KADAT) d'une quantité prédéterminable et signe conséquent dans la mémoire temporaire (38).

8. Système selon l'une des revendications 2 à 7, caractérisé par le fait que le moyen (139) d'autorisation de la mise à jour stable des seconds facteurs de correction (KADAT) dans la mémoire (39) est autorisé à agir par un moyen (137) de vérification de l'atteinte d'un stade prédéterminé postérieur au début de l'opération de calcul avec les moyens (136, 140, 141) de mise à jour temporaire des seconds facteurs de correction (KADAT).

9. Système selon l'une des revendications 2 à 8, caractérisé par le fait que le moyen (152) de commandement de la mise à jour effective des seconds facteurs de correction (KADAT) dans la mémoire (39) est autorisé à agir par un moyen (132) de vérification du changement d'adresse (ADDRNW) des zones (50, 51) de subdivision de la région de fonctionnement du moteur (1).

10. Système selon l'une des revendications précédentes, caractérisé par le fait que l'unité centrale de traitement (36) comporte un septième moyen (166) pour le calcul pour la mémoire (39) de valeurs initiales des seconds facteurs de correction (KADAT) du temps d'injection de base (TJ) en fonction d'une valeur initiale calculée par le cinquième moyen (105) relative à une des zones (50) de subdivision de la région de fonctionnement du moteur (1).

11. Système selon la revendication 10, caractérisé par le fait que la valeur initiale calculée par le cinquième moyen (105) est relative au fonctionnement au ralenti du moteur (1).

12. Système selon l'une des revendications 10 et 11, caractérisé par le fait que le septième moyen (166) de calcul est autorisé à agir par un moyen (160) de détection du premier cycle de fonctionnement du moteur (1) après l'alimentation électrique initiale de l'unité centrale de commande (16).

13. Système selon la revendication 12, caractérisé par le fait que le septième moyen (166) de calcul est autorisé à agir par des moyens successifs qui sont un premier moyen (162) pour la vérification de l'état de non-atteinte de valeurs limites supérieures (KLAMBDA0) des premiers facteurs de correction (KLAMBDA), un deuxième moyen (164) pour la vérification de l'atteinte d'un stade prédéterminable postérieur au début de fonctionnement des moyens de calcul (136, 140, 141) pour la mise à jour temporaire du second facteur de correction (KADAT), et un troisième moyen (165) pour la vérification que la .valeur moyenne (KADTC) du premier facteur de correction dépasse des seuils déterminés.

14. Système selon l'une des revendications 10 à 13? caractérisé par le fait que le septième moyen (166) calcule les valeurs initiales des seconds facteurs de correction (KADAT) du temps d'injection de base (TJ) en fonction des variations en pourcentage à partir de la valeur initiale calculée par le cinquième moyen (105).

15. Système selon la revendication 14, caractérisé par le faitque les variations en pourcentage à partir de la valeur initiale calculée par le cinquième moyen (105) augmentent avec l'augmentation de la distance entre les zones respectives (50) de subdivision de la région de fonctionnement du moteur (1) et la zone de référence (50) utilisée dans le calcul de la valeur initiale.

16. Système selon l'une des revendications précédentes, caractérisé par le fait que l'unité centrale de traitement (36) comporte un moyen (81) de détection du premier cycle de fonctionnement du moteur (1) après la connexion électrique initiale de l'unité centrale de traitement (16) pour la commande en conséquence du chargement des seconds facteurs de correction (KADAT) dans la mémoire (39) à partir d'adresses correspondantes d'une mémoire auxiliaire collectrice (40), le moyen (81) de détection de l'état simple du premier cycle de fonctionnement du moteur (1) étant agencé pour commander le chargement des seconds facteurs de correction (KADAT), de la mémoire (39), dans les adresses correspondantes de la mémoire auxiliaire collectrice (40), aux adresses correspondant aux seconds facteurs de correction (KADAT) qui diffèrent d'un seuil déterminé.

17. Système selon l'une des revendications précédentes, caractérisé par le fait que l'unité centrale de traitement (36) reçoit aussi des signaux d'information d'un moyen (27) de détection de la température du liquide de refroidissement du moteur et d'un moyen (17) de détection de la température de l'air fourni au moteur.

18. Système selon l'une des revendications précédentes, caractérisé par le fait que l'unité centrale électronique de commande (16) commande un dispositif d'injection à pointe unique (4).
